# EUROPÄISCHE PATENTANMELDUNG

(11) **EP 2 410 215 A1**
(43) Veröffentlichungstag der Anmeldung: **25.01.2012**
(21) Anmeldenummer: 10007630.6
(22) Anmeldetag: 22.07.2010
(51) Int. Cl.: F16J 15/32

(54) **Bürstendichtung für Strömungsmaschine**

(71) Anmelder: SIEMENS AKTIENGESELLSCHAFT, 80333 München (DE)
(72) Erfinder: Flegler, Johan, 45131 Essen (DE)

(57) **Zusammenfassung**

Die Erfindung betrifft eine Bürstendichtung (1) für eine Strömungsmaschine, wobei die Bürstendichtung (1) eine Bürste mit mehreren in Strömungsrichtung (4) hintereinander angeordnete Borsten (2, 3) umfasst, wobei die Borsten zwischen Stützelementen bzw. Stützplatten (5) stützend angeordnet sind und in Strömungsrichtung (4) nacheinander angeordnet sind, wobei die Dicken der Borsten (2, 3) in Strömungsrichtung (4) nacheinander variieren, so dass weiter vorne liegende Borsten(2) beispielsweise dicker ausgebildet sind als in Strömungsrichtung (4) dahinter ausgebildete Borsten (3).

## Beschreibung

Die Erfindung betrifft eine Bürstendichtung für eine Strömungsmaschine, wobei die Bürstendichtung mehrere Bürsten umfasst, die jeweils mehrere Borsten aufweisen.

In Strömungsmaschinen mit rotierenden und stehenden Bauteilen werden Dichtelemente unterschiedlicher Bauart zur Abdichtung verschiedener Druckräume verwendet. Hierbei kommen zwischen den rotierenden und den stehenden Bauteilen, insbesondere berührungslose Dichtungen (z.B. Labyrinthdichtungen) oder nachgiebige berührende Dichtelemente zum Einsatz. Zu nachgiebigen berührenden Dichtelementen werden u. a. so genannte Bürstendichtungen gezählt, bei denen ein Paket von Borsten zur Abdichtung zwischen Räumen mit unterschiedlichen Drücken verwendet wird.

Während berührungslose Dichtungen zum Abdichten von Druckdifferenzen von einigen Millibar bis zu mehreren 100 bar geeignet sind, ist der Verwendungsbereich von Bürstendichtungen selbst bei mehrstufiger Anordnung begrenzt.

Bürstendichtungen sind hierbei besonders tolerant gegen ein Unterschreiten des Radialspaltes zwischen dem drehenden Bauteil und dem stehenden Bauteil. Die Borsten der Bürste geben bei einem Unterschreiten des Radialspiels und einem Anstreifen der Dichtung an der sich drehenden Welle nach und es kommt zu einem Nachgeben der Borsten und zu einem Verschleiß an den Borsten, wenn der Kontakt zwischen den stehenden Borsten und dem drehenden Bauteil längere Zeit andauert. Daneben ist eine Bürste gut geeignet, eine Druckdifferenz aufzunehmen und auf diese Weise die Lässigkeit der Dichtung effizient herabzusetzen. Für die Überwindung größerer Druckdifferenzen werden Bürstendichtungen - ebenso wie Labyrinthdichtungen - mehrstufig ausgebildet, so dass mehrere Bürsten unter Zwischenanordnung von Freiräumen zwischen den Bürsten eine gewisse Druckdifferenz aufnehmen, bis zur Entspannung auf den Umgebungsdruck. Die Strömungsrichtung im Sinne der Erfindung ist hierbei, die Richtung des Druckabbaus von einem hohen Druckniveau auf ein niedriges Druckniveau.

Die Erfindung hat es sich zur Aufgabe gemacht, eine Bürstendichtung zu schaffen, welche eine verbesserte Dichtungswirkung zeigt.

Zur Lösung wird vorgeschlagen, dass die in Strömungsrichtung hintereinander angeordneten Borsten in der Bürste unterschiedliche Dicken aufweisen.

Bisherige bekannte Bürstendichtungen weisen Borsten auf, die in den Bürsten eine einheitliche Dicke umfassen. In Strömungsrichtung werden in bekannter Weise mehrere Bürsten hintereinander angeordnet. Allerdings haben die Borsten in den jeweiligen Bürsten immer eine einheitliche Dicke. Die Dicke der Borsten in Strömungsrichtung in den Bürsten kann unterschiedlich sein. Gemäß der Erfindung wird nun vorgeschlagen, bereits die Borsten in einer Bürste zu variieren. Erfindungsgemäß wird dazu vorgeschlagen, dass die Dicken der Borsten in einer Bürste unterschiedlich ausgebildet werden. Das bedeutet, dass bereits ein Borstenpaket in der Bürste derart aufgebaut wird, dass eine Abstufung der Borstensteifigkeit über der axialen Baulänge der gesamten Bürstendichtung erfolg. Der Vorteil ist hierbei u. a., dass dickere und steifere Borsten, welche sich stromauf wie stromab oder lediglich stromauf befinden, das innere weniger steifere und dicke Borstenpaket vor Schwingungsanregungen schützen und weiter die dünneren Borsten im Inneren der Bürstendichtung einen kompakteren Verband mit kleineren Zwischenräumen aufweisen, was wiederum zu einer guten Leckagereduktion führt. Solche Bürstendichtungen können mit einer hervorragenden Leckagereduzierung ohne erhöhten Verschleiß der stromauf liegenden Borsten einer hohen Druckdifferenz ausgesetzt werden.

Zumal können diese erfindungsgemäß ausgebildeten Bürstendichtungen in Bereichen mit großer Druckdifferenz eingesetzt werden.

In den Unteransprüchen sind vorteilhafte Weiterbildungen angegeben. So ist es vorteilhaft, wenn in Strömungsrichtung vorne angeordnete Borsten dicker ausgebildet sind als die dahinter in Strömungsrichtung angeordneten Borsten.

In einer besonders vorteilhaften Weiterbildung sind in Strömungsrichtung vorne angeordnete Borsten dicker als die direkt dahinter angrenzenden dünneren Borsten ausgebildet, wobei in Strömungsrichtung hinter den dünnen Borsten direkt angrenzende dickere Borsten angeordnet sind. Durch diese kompakte Bauweise der Borsten ist eine noch verbesserte Dichtwirkung erreichbar.

Die Erfindung wird anhand eines Ausführungsbeispiels näher erläutert. Darin zeigen:
- FIG 1: eine Querschnittsansicht durch eine erfindungsgemäße Borstendichtung,
- FIG 2: eine Draufsicht von unten und eine Seitenansicht der erfindungsgemäßen Bürstendichtung.

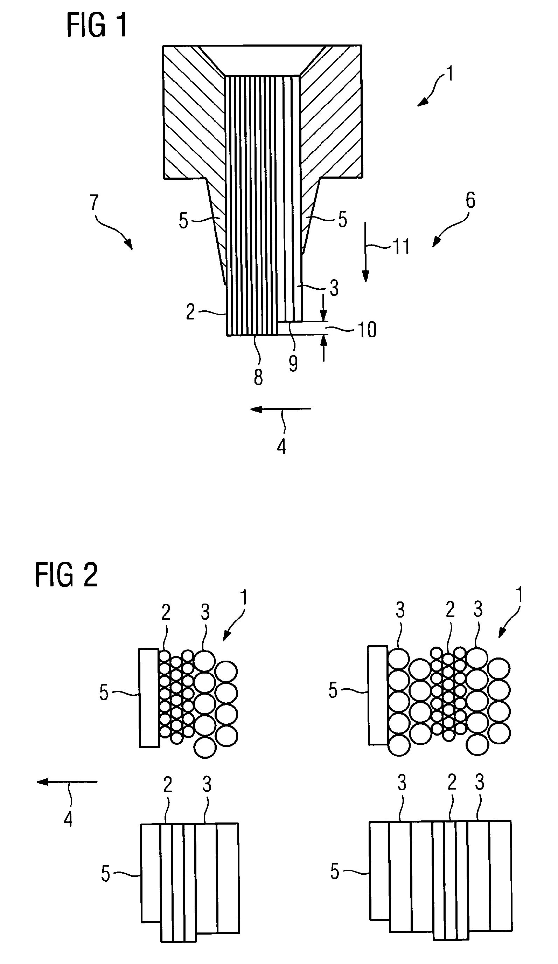

FIG 1 zeigt eine Bürstendichtung 1, welche einen Spalt zwischen einem Stator und einem Rotor abdichtet. Die Bürstendichtung 1 umfasst mehrere Borsten 2, 3, wobei in dem in FIG 1 dargestellten Ausführungsbeispiel in einer Strömungsrichtung 4, zunächst dicke Borsten 3 und direkt hinter den dicken Borsten 3, dünne Borsten 2 angeordnet sind. Das Paket aus den dünnen Borsten 2 und dicken Borsten 3 wird auch als Bürste bezeichnet. Unter dem Begriff Bürste wird hiermit eine Ansammlung von Borsten verstanden, die direkt hintereinander, insbesondere in einer Strömungsrichtung 4 ohne weitere Elemente angeordnet sind. Insbesondere wird unter einer Bürste eine Borstenansammlung verstanden zwischen zwei Stützplatten 5. Die Stützplatten 5 bewirken, dass die Borsten 2, 3 sich infolge der Druckdifferenz zwischen einem ersten Druckraum 6 und einem zweiten Druckraum 7 sich die Borsten 2,3 nicht abknicken. Der Druck im ersten Druckraum 6 ist im in FIG 1 dargestellten Ausführungsbeispiel größer als der Druck im zweiten Druckraum 7. Erfindungsgemäß ist nun die Dicke der Borsten 2, 3 in Strömungsrichtung 4 unterschiedlich und wird durch kein weiteres Stützelement unterbrochen. Wie in FIG 1 dargestellt ist zunächst die Bürste aus dicken Borsten 3 und anschließend aus dünnen Borsten 2 zusammengebaut.

Die zum Abdichten eines Spaltes, der in der FIG 1 nicht näher dargestellt ist, ausgebildeten Borsten 2, 3 sind hierbei derart ausgebildet, dass die dünnen Borsten 2 länger ausgebildet sind als die dicken Borsten 3. Mit anderen Worten ist der Innendurchmesser der durch die Spitze der dünnen Borsten 2 gebildet wird geringer als der Innendurchmesser der durch die Spitzen der Dicken Borsten 3 gebildet wird.

Das bedeutet, dass die Borsten 2, 3 an ihrem stirnseitigen Ende 8, 9 unterschiedliche Längen aufweisen. Dies führt dazu, dass ein Längenunterschied 10 zwischen der dünnen Borste 2 und der dicken Borste 3 entsteht. Solche Bürstendichtungen 1 werden beispielsweise in Strömungsmaschinen, insbesondere in Dampfturbinen oder Gasturbinen eingesetzt.

In der FIG 2 ist eine weitere Anordnung der erfindungsgemäßen Bürstendichtung 1 dargestellt. In der linken Ausführungsform der Bürstendichtung 1 ist eine Ansicht von unten zu sehen. Diese Ansicht entspricht im Wesentlichen einer Ansicht in radialer Richtung. Das bedeutet, dass man die Bürsten in ihrer Längsrichtung 11 betrachtet. Die dünnen Borsten 2 liegen zum einen zunächst an einer Stützplatte 5 an. In Strömungsrichtung 4, die im Wesentlichen eine unerwünschte Leckageströmung darstellt, ist hinter der dicken Borste 3 eine dünne Borste 2, d.h. eine Borste 2 mit dünneren Durchmesser dargestellt. Der Durchmesser der dicken Borste 3 kann hierbei im Wesentlichen doppelt so dick sein wie der Durchmesser der dünnen Borste 2. In der unteren Darstellung in der FIG 2 sind in schematischer Weise die Längen der einzelnen Komponenten, wie der dünnen Borsten 2, der dicken Borsten 3, sowie der Stützplatte 5 dargestellt. Wesentlich ist hierbei, dass die Stützplatte 5 ein im Vergleich zu den dünnen Borsten 2 und dicken Borsten 3 kürzeres Element darstellt. Des Weiteren ist die Länge der dünneren Borsten 2 größer als die Länge der dicken Borsten 3. Das bedeutet, dass der Innendurchmesser der dünnen Borsten 2 geringer ist als der Innendurchmesser der dicken Borsten 3.

In der rechten Ausführungsform der Bürstendichtung gemäß FIG 2 ist eine alternative Möglichkeit zu sehen. Der Unterschied besteht darin, dass in Strömungsrichtung 4 zunächst dicke Borsten 3 angeordnet sind und nach diesen Borsten 3 in Strömungsrichtung 4 direkt dahinter dünne Borsten 2 und anschließend direkt hinter den dünnen Borsten 2 wieder dicke Borsten 3 angeordnet sind. Im in FIG 2 dargestellten Ausführungsbeispiel weisen die dicken Borsten 3 jeweils gleiche Dicken auf. In alternativen Ausführungsformen kann die Dicke der direkt vor der Stützplatte 5 angeordneten Borsten geringfügig größer oder geringer sein als die Dicke der vorne in Strömungsrichtung 4 angeordneten dünnen Borsten 2 sein.

In einer weiteren alternativen Ausführungsform kann eine alternierende Folge von dicken 3 und dünnen Borsten 2 in Strömungsrichtung 4 nachfolgend angeordnet werden. Das bedeutet, dass hinter der in der rechten Ausführungsform gemäß FIG 2 dargestellten dicken Borsten 3 noch weitere Borsten angeordnet werden können mit unterschiedlichen Dicken. So ist es z.B. möglich, dass hinter der dicken Borste 3 eine weitere dünne Borste 2 und nach der dünnen Borste 2 eine weitere dicke Borste 3 angeordnet wird.

In der unteren Abbildung des in der FIG 2 dargestellten Ausführungsbeispiels sind wiederum die Längen der Borsten in schematischer Weise dargestellt. Wesentlich ist hierbei, dass die Längen der dicken Borsten 3 im Wesentlichen kürzer sind als die Längen der dünnen Borsten 2.

Des Weiteren können die Borsten 2, 3 mit größerem Durchmesser in axialer Richtung im Innendurchmesser variabel gestaltet werden, so dass in tangentialer Richtung ein trapezförmiges Profil des Borstenpaketes entsteht. Der Einfluss der Reibung zwischen den einzelnen Borsten 2, 3 der Bürste kann besser kontrolliert werden, wenn in Strömungsrichtung 4 vor und hinter der Bürste vorgesehene Schutz- bzw. Stützringe, die die Borsten 2, 3 einströmseitig schützen und abströmseitig stützen, gezielt in der Höhe variiert werden, so dass einige Bürsten der Anordnung flexibler auf Veränderungen der Strömungsbedingungen reagieren und andere infolge verstärkter Reibung zwischen den Borsten 2, 3 starrer verbleiben. Bei der einzelnen Bürste kann der stromab angeordnete Stützring mit geringerem Spalt zum Rotor ausgeführt werden, als der stromauf angeordnete Stützring, um den Blow-Down-Effekt günstig zu beeinflussen.

Einen weiteren Einfluss auf die Druckdifferenz der Bürste und die entsprechende Leckage hat die Ausgestaltung einer Kammer im Stützring der Bürste, bekannt als Druckentlastungszone. Diese ermöglicht insbesondere bei höheren Druckdifferenzen ein besseres Funktionieren des Blow-Down-Effekts. Damit spielt im vorhandenen Beispiel die Ausgestaltung der Entlastungszone für die abströmseitigen Stufen der mehrstufigen Anordnung eine entscheidende Rolle, während die einströmseitigen Bürsten mit geringer oder fehlender Druckentlastung ausgestattet sein können.

Daneben kann es sinnvoll sein, wenn in Strömungsrichtung 4 vorne angeordnete Bürsten einen geringeren Abstand der Borstenspitzen zu der gegenüberliegenden Rotorfläche aufweisen als dahinter angeordnete Bürsten bzw. einige Bürsten eine Länge der Borsten 2, 3 aufweisen, die zu einem stärkeren Anliegen der Borsten an gegenüber liegenden Flächen führt, als bei anderen Bürsten bzw. Borsten.

Eine weitere Möglichkeit, die Druckdifferenzen über die einzelnen Stufen bzw. Bürsten präziser vorherzusagen besteht darin, dass der axiale Abstand zwischen den Bürsten in Strömungsrichtung von Bürste zu Bürste zunimmt. Auf diese Weise können auch zwischen Bürsten sich in Umfangsrichtung erstreckende Dichtspitzen vorgesehen werden, so dass eine Kombination aus Labyrinthdichtung und Bürstendichtung entsteht und die Vorteile der Bürstendichtung hinsichtlich der Toleranz gegenüber dem Unterschreiten des Radialspiels erhalten bleiben.

Die Figuren sind nicht auf das spezielle Ausführungsbeispiel eingeschränkt. Für den Fachmann ergeben sich neben dem Ausführungsbeispiel noch zahlreiche weitere Varianten der Erfindung.

## Patentansprüche

1. Bürstendichtung (1) einer Strömungsmaschine,
wobei die Bürstendichtung (1) mehrere Bürsten umfasst, die jeweils mehrere Borsten (2, 3) aufweisen,
**dadurch gekennzeichnet, dass**
die Borsten (2, 3) in einer Bürste unterschiedliche Dicken aufweisen.

2. Bürstendichtung (1) nach Anspruch 1,
wobei in Strömungsrichtung vorne angeordnete Bürsten dickere Borsten (3) aufweisen als dahinter angeordnete Borsten (2).

3. Bürstendichtung (1) nach Anspruch 1 oder 2,
wobei in Strömungsrichtung (4) vorne angeordnete Borsten (3) kürzer ausgebildet sind als dahinter angeordnete Borsten (2).

4. Bürstendichtung (1) nach einem der vorhergehenden Ansprüche,
wobei die Borsten (2, 3) in der Bürste an zumindest einem Stützelement (5) anliegen,
wobei das Stützelement (5) zum Stützen der Borsten (2, 3) ausgebildet ist.

5. Bürstendichtung (1) nach Anspruch 4,
wobei die Borsten (2, 3) in der Bürste zwischen zwei Stützelementen (5) angeordnet sind.

6. Bürstendichtung (1) nach Anspruch 4 oder 5,
wobei die Stützelemente (5) als Stützblech oder als Stützplatte ausgebildet sind.

7. Bürstendichtung (1) nach einem der vorhergehenden Ansprüche,
wobei in Strömungsrichtung (4) vorne angeordnete Borsten (3) dicker als die direkt dahinter angrenzenden dünnen Borsten (2) ausgebildet sind,
wobei in Strömungsrichtung (4) hinter den dünnen Borsten (2) dicht angrenzende dickere Borsten (3) angeordnet sind.

8. Bürstendichtung (1) nach Anspruch 7,
wobei die vor den dünnen Borsten (2) und hinter den dünnen Borsten (2) angeordneten dicken Borsten (3) unterschiedliche Dicken aufweisen.

9. Bürstendichtung (1) nach Anspruch 7,
wobei die vor den dünneren Borsten (2) und hinter den dünneren Borsten (2) angeordneten dicken Borsten (3) im Wesentlichen gleiche Dicken aufweisen.

10. Bürstendichtung (1) nach einem der vorhergehenden Ansprüche,
wobei in Strömungsrichtung (4) hintereinander dicke (3) und dünne Borsten (2) alternierend ausgebildet sind.
